# FASCICULE DE BREVET EUROPEEN

(11) **EP 3 621 127 B1**
(45) Date de publication et mention de la délivrance du brevet: **17.03.2021**
(21) Numéro de dépôt: 19190795.5
(22) Date de dépôt: 08.08.2019
(51) Int. Cl.: H01M 2/02, H01M 2/04, H01M 2/08, H01M 10/12

(54) **PILE, EN PARTICULIER PILE BOUTON, ET SON PROCÉDÉ DE FABRICATION**
BATTERIE, INSBESONDERE KNOPFBATTERIE, UND IHR HERSTELLUNGSVERFAHREN
BATTERY, IN PARTICULAR A BUTTON CELL, AND METHOD FOR MANUFACTURING SAME

(30) Priorité: 07.09.2018 EP 18193252
(43) Date de publication de la demande: 11.03.2020
(73) Titulaire: The Swatch Group Research and Development Ltd, 2074 Marin (CH)
(72) Inventeur: REINAUER, Olga, 2000 Neuchâtel (CH)
(74) Mandataire: ICB SA

(56) Documents cités:
- EP-A1- 3 364 479
- CH-A2- 713 316
- DE-A1- 10 055 373
- DE-A1-102016 207 814
- US-A1- 2017 149 025

## Description

### Domaine technique

La présente invention se rapporte à un procédé de fabrication de piles et, en particulier, de piles boutons. Elle se rapporte également à la pile issue du procédé de fabrication susmentionné.

### Arrière-plan technologique

Les piles boutons comportent généralement un boîtier muni d'un récipient et d'un couvercle formant respectivement les pôles positif et négatif de la pile. De manière conventionnelle, les piles boutons sont scellées avec un joint polymère positionné par compression entre le récipient et le couvercle. Ce joint polymère assure l'isolation galvanique entre les pôles et forme une barrière entre l'électrolyte contenue à l'intérieur de la pile et l'environnement extérieur. Cette barrière n'est cependant pas complètement étanche. Dans certaines conditions, par ex. d'humidité excessive, l'humidité peut rentrer à l'intérieur de la pile par l'interface entre je joint et le boîtier. Cela conduit au vieillissement prématuré de la pile et dès lors à une diminution de la durée de vie de la pile.

Il existe des solutions pour améliorer l'adhésion du joint au boîtier de la pile. Une solution consiste à enduire de colle le joint pour qu'il colle aux surfaces respectives du récipient et du couvercle contre lesquelles il est pressé. Cependant, l'adhésion entre le joint et la colle n'est souvent pas suffisante pour empêcher une circulation de fluide entre l'intérieur et l'extérieur de la pile. Dans le cadre de la présente invention, on a remarqué que le problème majeur ne découlait pas d'une mauvaise adhérence de la colle au métal formant le boîtier, comme la personne du métier aurait pu le penser a priori, mais plutôt d'une mauvaise adhérence au niveau de l'interface entre la colle et le joint. En effet, certains polymères tels que le polypropylène, dont l'usage est très répandu pour les joints incorporés dans les piles, ont de faibles énergies de surface qui ne permettent pas une adhésion correcte de la colle sur le joint.

De manière générale, il a été proposé d'augmenter l'énergie de surface et donc la mouillabilité de ces polymères par un traitement plasma ou corona. Ces traitements présentent cependant certains désavantages. Le traitement corona a pour désavantage d'être peu durable. En effet, la surface traitée perd ses propriétés améliorées d'adhésion sur une échelle de temps de l'ordre de 24 heures. Il est dès lors nécessaire de traiter et coller le polymère dans la foulée sans quoi l'adhésion de la colle sur le polymère ne sera pas suffisante. Le traitement plasma quant à lui nécessite un équipement coûteux sous une atmosphère spéciale (vide, argon ou oxygène). Par ailleurs, lors de la mise à l'air, la surface traitée perd également une partie de ses caractéristiques

Les documents CH 713 316 A2 et EP 3 364 479 A1, divulguent la fermeture hermétique d'une pile se faisant par compression et collage en utilisant (au moins) une colle entre le couvercle et le boîtier, lesdites surface à coller du boîtier et/ou du couvercle ayant subi auparavant une étape de dépôt d'une couche silicatée par sablage réactif. Un promoteur d'adhésion est en outre prévu aussi.

Les documents US 2017/149025 A1 et DE 10 2016 207814 A1 se réfèrent à des batteries qui sont scellées par un joint d'étanchéité en polypropylène combiné à une colle.

Le document DE 100 55 373 A1 divulgue un joint hermétique pour pile électrochimique qui comprend à la fois au moins une partie polymère flexible en polypropylène et une colle en polyamide, le tout formant un copolymère.

On remarque ainsi, à ce jour, que, malgré les efforts de recherche, aucune solution pleinement satisfaisante n'a permis de solutionner le problème de l'étanchéité des piles de manière simple et peu couteuse.

### Résumé de l'invention

La présente invention propose un nouveau procédé de fabrication de piles permettant d'améliorer l'étanchéité des piles et, plus spécifiquement, des piles boutons comportant un joint polymère collé.

A cet effet, le procédé de fabrication selon l'invention inclut, avant une étape d'apport d'une couche de colle sur le joint ou sur des parties du récipient et/ou du couvercle destinées à être accolées au joint, une étape consistant à implanter une couche silicatisée par sablage réactif sur au moins une partie de la surface du joint destinée à être accolée au boîtier par la couche de colle. Ce traitement de silicatisation permet d'augmenter l'énergie de surface du joint et par là-même la mouillabilité de la colle sur le joint. Il s'ensuit une meilleure adhésion de la colle sur le joint, résultant sur le produit final en une meilleure étanchéité de la pile. Par rapport aux traitements corona ou plasma, le sablage réactif offre de manière durable des propriétés de mouillabilité améliorées à la surface traitée, aucune modification significative de la mouillabilité n'étant observée après un mois de vieillissement. Par ailleurs, le sablage réactif présente pour autre avantage de pouvoir être réalisé à l'air sans équipement coûteux.

La présente invention concerne ainsi une méthode de fabrication d'une pile, en particulier d'une pile bouton, telle que définie à la revendication 1. La présente invention concerne également une pile, en particulier une pile bouton, telle que définie à la revendication 11.

Selon une variante avantageuse du procédé selon l'invention, le procédé de fabrication inclut en outre, entre les étapes d'implantation de la couche silicatisée et de dépôt de la couche de la colle, une étape de dépôt d'un promoteur d'adhésion. Le promoteur d'adhésion comprend des silanes qui forment une liaison chimique avec la couche silicatisée, et d'autres fonctions chimiques sélectionnées en fonction de la colle pour réagir spécifiquement avec la colle déposée. Il se crée ainsi une liaison chimique durable entre les surfaces d'assemblage du boîtier et la colle agencée entre ces surfaces, permettant d'assurer une liaison forte et l'étanchéité de la pile.

D'autres caractéristiques et avantages de la présente invention apparaîtront dans la description suivante de modes de réalisation préférés, présentés à titre d'exemple non limitatif en référence aux dessins annexés.

### Brève description des figures

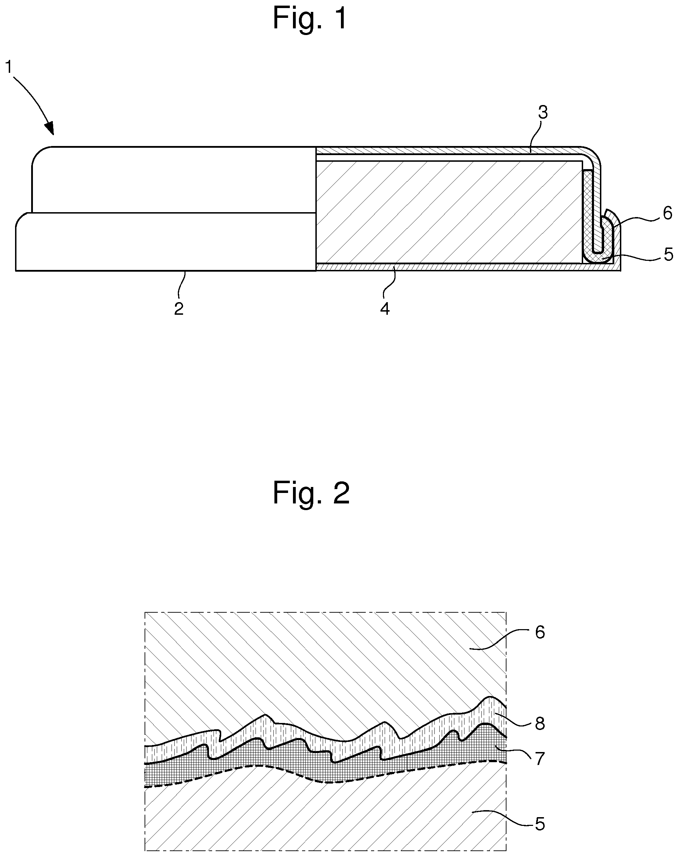

La figure 1 représente une vue en demi-coupe d'une pile bouton avec un boîtier muni d'un couvercle et d'un récipient scellés à l'aide d'un joint polymère traité et collé selon le procédé de fabrication de l'invention.
La figure 2 représente schématiquement les différentes couches implantées ou déposées avec le procédé selon l'invention à la surface du joint polymère.

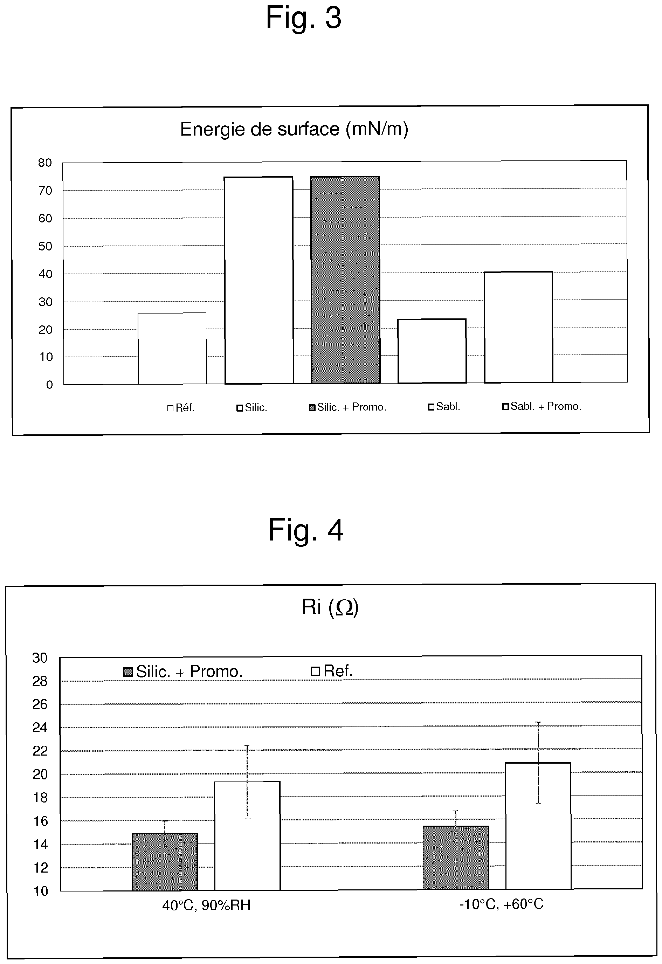

La figure 3 est un graphique représentant l'énergie de surface d'une plaquette en polypropylène, respectivement en l'absence d'un traitement de surface (Ref.), après un sablage réactif selon l'invention suivi (Silic. + Promo.) ou pas (Silic.) d'un traitement de fonctionnalisation, après un sablage conventionnel suivi (Sabl. + Promo.) ou pas (Sabl.) d'un traitement de fonctionnaiisation.
La figure 4 est un graphique représentant la résistance interne des piles pendant la décharge après des traitements de vieillissement de respectivement 18 semaines à 40°C sous 90% d'humidité résiduelle et 18 semaines avec des cycles thermiques oscillant entre -10 et +60°C. Les résultats sont présentés pour des piles comprenant un joint silicatisé et fonctionnalisé selon l'invention (Silic. + Promo.) et des piles comprenant un joint standard (Ref.).

### Description détaillée de l'invention

La présente invention se rapporte à un procédé de fabrication d'une pile. Elle se rapporte plus particulièrement aux étapes mises en œuvre pour assurer un assemblage étanche entre le récipient et le couvercle du boîtier de la pile. La présente invention se rapporte également à la pile, et notamment à la pile bouton, issue de ce procédé de fabrication.

La pile bouton 1 représentée à la figure 1 comporte un boîtier 2 composé d'un couvercle 3 et d'un récipient 4 formant respectivement les pôles négatif et positif de la pile. De manière conventionnelle, le boîtier 2 comporte un joint polymère 5 positionné par compression entre le couvercle 3 et le récipient 4. Ce joint polymère est préférentiellement en polypropylène, mais il peut également être en polyéthylène, en copolymères de polyéthylène et de polypropylène, ou encore réalisé dans d'autres résines thermoplastiques à base de polyoléfines. Il est collé sur le couvercle 3 et le récipient 4 avec une couche de colle 6 s'étendant, de préférence, sur toute la surface du joint 5.

Selon l'invention, lors du procédé de fabrication, une partie ou, de préférence, toute la surface du joint a été, préalablement au collage, traitée par sablage réactif et optionnellement fonctionnalisée pour améliorer l'adhésion entre le joint et la couche de colle et, par là-même, l'étanchéité du boîtier de pile. Selon la variante de la figure 1, toute la surface du joint 5 est soumise au traitement de silicatisation et optionnellement fonctionnalisée. Selon une autre variante, il est également envisageable de ne traiter que les faces du joint destinées à être accolées avec le récipient et le couvercle dans la partie inférieure du boîtier, c.à.d. là où la fermeture du boîtier est réalisée. Pour d'autres configurations de piles, cette zone de fermeture peut se trouver dans la partie supérieure du boîtier ; auquel cas, c'est cette zone dans la partie supérieure du boîtier qui sera préférentiellement traitée.

Comme schématisé à la figure 2, la surface du joint 5 est d'abord soumise à un sablage réactif, nommé aussi silicatisation, qui consiste à sabler la surface avec des particules d'alumine enrobées avec du dioxyde de silicium, aussi appelé silice. Typiquement, les particules ont une taille moyenne comprise entre 10 µm et 100 µm, et, de préférence, entre 20 µm et 40 µm. Le sablage réactif augmente la rugosité et permet de déposer une couche silicatisée 7. Cette couche se présente sous forme d'une couche dense comprenant des particules implantées dans le joint sur une certaine épaisseur en surface de ce dernier. On observe que la couche est plutôt discontinue et formée de particules individuelles solidement ancrées à la surface du joint 5 traitée. Les particules pénètrent la surface du joint sur typiquement une épaisseur moyenne inférieure ou sensiblement égale à 50 µm.

Comme démontré ci-après avec des exemples, le traitement de silicatisation permet d'augmenter significativement l'énergie de surface du joint polymère et, par là-même, la mouillabilité de la colle sur le joint. Ce traitement de silicatisation est réalisé sous des conditions de pression et de temps qui peuvent être aisément déterminées par l'homme de métier en fonction de l'équipement de sablage à sa disposition.

Optionnellement, après le sablage réactif, un promoteur d'adhésion 8, qu'on peut aussi qualifier d'agent de couplage chimique et de fonctionnalisation, est déposé sur la couche silicatisée 7 ancrée à la surface du joint 5. Avantageusement, le promoteur d'adhésion comprend des silanes dont les fonctions alkoxyl sont destinées à former une liaison chimique avec la couche silicatisée. Il comprend en outre d'autres groupements fonctionnels organiques tels que, par exemples, des acrylates, amines, époxy, alkyl, acetoxy, aryl, glycol, mercapto, methacryl, vinyl, etc., destinés à se lier avec la colle via une ou plusieurs liaisons choisies parmi les liaisons fortes du type liaisons ioniques ou covalentes et parmi des interactions faibles de type interactions de Van der Waals, liaisons hydrogène, etc. La fonctionnalité doit être sélectionnée pour être adaptée à la colle choisie. Ainsi, par exemple, un promoteur d'adhésion comprenant des groupes acrylates est privilégié lorsque la colle est une colle acrylate. Un promoteur d'adhésion comprenant des groupes amines est par contre privilégié lorsque la colle est une colle époxy. Le promoteur d'adhésion ainsi que la colle sont également choisis en fonction de leur compatibilité chimique avec les matières utilisées à l'intérieur et à l'extérieur à la pile.

Finalement, la couche de colle 6 est déposée sur la surface du joint 5 préalablement traitée et/ou sur la surface du boîtier destinée à être accolée au joint. On a déjà cité les colles acrylate ou époxy mais d'autres colles peuvent être utilisées, notamment une colle polyuréthane pour n'en citer qu'une. Préférentiellement, il s'agit de colles liquides permettant d'enduire le joint par trempage suivi d'un séchage.

In fine, la mouillabilité de la colle sur la surface traitée par sablage réactif et éventuellement fonctionnalisée est améliorée. Il s'ensuit que l'adhésion entre le joint et la colle est améliorée. En présence d'un promoteur d'adhésion, l'ancrage de la couche silicatisée dans le joint combiné, d'une part, aux liaisons chimiques entre la couche silicatisée et le promoteur d'adhésion et, d'autre part, aux interactions entre le promoteur d'adhésion et la colle crée une liaison forte et durable entre la colle et le joint.

Par ailleurs, on précisera que la présente invention n'exclut pas de traiter également les surfaces du boîtier destinées à être accolées au joint. Ces dernières peuvent être soumises à un traitement de silicatisation et de fonctionnalisation ou uniquement à un traitement de silicatisation ou de fonctionnaiisation.

Les avantages du procédé selon l'invention sont maintenant illustrés au travers des exemples non limitatifs décrits ci-après.

L'effet de la silicatisation sur l'énergie de surface d'un joint en polypropylène a été déterminé à l'aide de mesures d'angle de contact. L'effet de la silicatisation et de la fonctionnalisation sur la dégradation des composants de la pile a également été déterminé.

### Effet de la silicatisation sur l'énergie de surface du polymère (fig.3)

Les calculs de l'énergie de surface d'un polypropylène (PP) commercial de Sigma-Alrich ont été faits selon la méthode de Owens, Wendt, Rebel & Käble (OWRK) sur base des mesures d'angles de contact de deux liquides (eau et diiodométhane) sur le PP. Cinq échantillons ont été préparés :
- Un échantillon de référence en PP, indiqué Ref. à la figure 3 ;
- Deux exemples comparatifs avec un échantillon en PP ayant été soumis à un sablage standard, indiqué Sabl., et un échantillon en PP ayant été soumis à ce même sablage standard suivi d'une fonctionnalisation avec un promoteur d'adhésion, indiqué Sabl.+ Promo. ;
- Deux exemples selon l'invention avec un échantillon en PP ayant été soumis à une silicatisation (échantillon Silic.) et avec un échantillon en PP ayant été soumis à une silicatisation suivie d'une fonctionnalisation (échantillon Silic. + Promo.) avec le même promoteur d'adhésion que l'exemple comparatif.

Le sablage réactif a été réalisé avec une microsableuse CoJet Prep™ en utilisant le sable CoJet Sand™ de 3M™ ESPE™ ayant une taille moyenne de particules de 30 µm sous une pression de 5 bar. Les essais comparatifs de sablage conventionnel, c.à.d. de sablage ayant pour objet de créer une rugosité mais sans implantation d'une couche silicatisée, ont été réalisés avec du sable présentant une taille moyenne de particules semblable de 36.5 µm (sable F280). Le promoteur d'adhésion utilisé pour les essais comporte des groupes silanes et amines (Asusil de The Swatch Group R&D, division Polymers).

Les résultats de la figure 3 montrent que la silicatisation seule ou combinée au promoteur d'adhésion augmente de manière significative l'énergie de surface avec des valeurs multipliées par 3 par rapport à l'échantillon de référence. Les résultats montrent également que l'augmentation de la rugosité par un sablage standard sans implantation d'une couche silicatisée et sans dépôt ultérieur d'un promoteur d'adhésion n'a pas d'incidence sur l'énergie de surface. On peut en conclure que la couche silicatisée implantée par sablage réactif permet d'améliorer la mouillabilité de la surface en polypropylène avec pour conséquence une meilleure répartition de la colle sur le joint et au final une meilleure étanchéité entre les parties du boîtier assemblées par collage. Par ailleurs, des mesures d'angles de contact effectuées un mois après le sablage réactif de la surface en polypropylène ont montré que le sablage réactif améliore durablement la mouillabilité de la surface.

### Effet de la silicatisation et de la fonctionnalisation sur le vieillissement des piles (fig.4)

Des tests de vieillissement ont été réalisés sur deux lots de piles lithium primaires de format CR 2450N assemblées avec un joint en PP. Un lot contenait un joint soumis sur toute sa surface à un traitement de silicatisation suivi d'un traitement avec un promoteur d'adhésion sur le joint et sur le boîtier, les conditions de silicatisation et le promoteur d'adhésion étant les mêmes que pour les essais portant sur l'énergie de surface. Un autre lot contenait un joint standard en PP non silicatisé. Pour les deux lots, le joint a été collé au boîtier en acier avec une colle liquide époxy. Les piles, entre 6 et 13 par lot, ont été placées dans des enceintes climatiques pendant 18 semaines avec plusieurs piles de chaque lot par enceinte. Des tests ont été réalisés dans une enceinte à une température de 40°C avec 90% d'humidité résiduelle. D'autres tests ont été réalisés dans une enceinte avec des cycles thermiques oscillant entre -10 et +60°C sous humidité ambiante. Les résistances internes qui indiquent la dégradation des composants de la pile ont été mesurées pendant la décharge à la fin des tests de vieillissement. La moyenne des mesures par lot est présentée à la figure 4. Les résultats montrent que le traitement de silicatisation et de fonctionnalisation (Silic. + Promo.) du joint diminue la résistance interne des piles après le vieillissement d'environ 25% par rapport à une pile comprenant un joint standard (Ref.). On peut en déduire que l'étanchéité de la pile est améliorée grâce à ce traitement, ce qui permet d'augmenter sa durée de vie.

### Légende des figures

(1) Pile bouton
(2) Boîtier
(3) Couvercle
(4) Récipient
(5) Joint polymère
(6) Couche de colle
(7) Couche silicatisée
(8) Couche du promoteur d'adhésion
Ref. : Référence
Sabl. : Sablage conventionnel
Silic. : Silicatisation
Promo. : Promoteur

## Revendications

1. Procédé de fabrication d'une pile, en particulier d'une pile bouton (1), comprenant :
- un boîtier (2) muni d'un récipient (4) et d'un couvercle (3),
- un joint polymère (5) réalisé dans une résine thermoplastique à base de polyoléfines, ce joint polymère étant comprimé entre le récipient et le couvercle et collé au boîtier pour assurer l'étanchéité du boîtier et l'isolation galvanique entre le récipient et le couvercle ;
ce procédé étant caractérisé qu'en ce qu'il comporte successivement :
- une étape d'implantation par sablage réactif, sur tout ou partie de la surface du joint polymère (5) destinée à être accolée au boîtier, de particules d'alumine enrobées de silice pour former une couche silicatisée (7) sur cette surface du joint polymère,
- une étape d'apport d'une couche de colle (6) sur la surface du joint polymère et/ou sur tout ou partie de la surface du récipient (4) et/ou de la surface du couvercle (3) destinées à être accolées au joint polymère, et
- une étape d'assemblage du boîtier (2) avec le joint polymère (5) positionné par compression entre le récipient et le couvercle et collé au boîtier au moyen de ladite couche de colle (6).

2. Procédé de fabrication selon la revendication 1, **caractérisé en ce qu'**il comporte en outre, entre l'étape d'implantation d'une couche silicatisée (7) et l'étape d'apport d'une couche de colle (6), une étape de dépôt d'une couche d'un promoteur d'adhésion (8) comprenant des groupes silanes se liant chimiquement avec la couche silicatisée (7).

3. Procédé de fabrication selon une quelconque des revendications précédentes, **caractérisé en ce que** la couche de colle (6) est liquide lors de l'étape d'apport.

4. Procédé de fabrication selon une quelconque des revendications précédentes, **caractérisé en ce que** la couche de colle (6) est formée d'une colle époxy, acrylate ou polyuréthane.

5. Procédé de fabrication selon la revendication 2, **caractérisé en ce que** la couche de colle (6) est formée d'une colle acrylate ; et **en ce que** le promoteur d'adhésion (8) comporte des groupes fonctionnels destinés à se lier avec la couche de colle (6) via une ou plusieurs liaisons sélectionnées notamment parmi les interactions de type ionique ou covalente et des interactions intermoléculaires faibles telles que les forces de Van der Waals ou les liaisons hydrogène ; ledit promoteur d'adhésion (8) comprenant des groupes fonctionnels acrylates et étant utilisé en combinaison avec la colle acrylate.

6. Procédé de fabrication selon la revendication 2, **caractérisé en ce que** la couche de colle (6) est formée d'une colle époxy ; et **en ce que** le promoteur d'adhésion (8) comporte des groupes fonctionnels destinés à se lier avec la couche de colle (6) via une ou plusieurs liaisons sélectionnées notamment parmi les interactions de type ionique ou covalente et des interactions intermoléculaires faibles telles que les forces de Van der Waals ou les liaisons hydrogène ; ledit promoteur d'adhésion (8) comprenant des groupes fonctionnels amines et étant utilisé en combinaison avec la colle époxy.

7. Procédé de fabrication selon une quelconque des revendications précédentes, **caractérisé en ce que** l'étape d'implantation d'une couche silicatisée (7) est réalisée par sablage réactif avec des particules d'alumine enrobées de silice ayant une taille moyenne comprise entre 10 µm et 100 µm et, de préférence, entre 20 µm et 40 µm.

8. Procédé de fabrication selon une quelconque des revendications précédentes, **caractérisé en ce que** tout ou partie de la surface du récipient (4) et de la surface du couvercle (3) destinées à être accolées au joint (5) est également soumise à un sablage réactif avec des particules d'alumine enrobées de silice avant l'étape d'apport de la couche de colle (6).

9. Procédé de fabrication selon une quelconque des revendications 2, 5, 6 ou une quelconque des revendications 3, 4, 7, 8 dépendantes de la revendication 2, **caractérisé en ce que** tout ou partie de la surface du récipient (4) et de la surface du couvercle (3) destinées à être accolées au joint (5) est également soumise à une étape de dépôt d'une couche d'un promoteur d'adhésion (8) avant l'étape d'apport de la couche de colle (6).

10. Procédé de fabrication selon une quelconque des revendications précédentes, **caractérisé en ce que** le joint (5) polymère est en polypropylène, en polyéthylène ou en copolymères de polyéthylène et de polypropylène.

11. Pile, en particulier pile bouton (1), comprenant :
- un boîtier (2) muni d'un récipient (4) et d'un couvercle (3),
- un joint polymère (5) réalisé dans une résine thermoplastique à base de polyoléfines, ce joint polymère étant comprimé entre le récipient et le couvercle et collé au boîtier au moyen d'une couche de colle (6) pour assurer l'étanchéité du boîtier et l'isolation galvanique entre le récipient et le couvercle ;
la pile étant **caractérisée en ce que** le joint polymère (5) comprend une couche silicatisée (7) implantée sur tout ou partie de sa surface, cette couche silicatisée étant au moins partiellement située sous ladite couche de colle (6) qui est agencée entre le boîtier et le joint polymère, pour améliorer l'adhésion entre le joint polymère et la couche de colle.

12. Pile selon la revendication 11, **caractérisée en ce qu'**une couche d'un promoteur d'adhésion (8) est intercalée entre ladite couche silicatisée (7) et la couche de colle (6) pour lier chimiquement la couche silicatisée avec la couche de colle.

13. Pile selon la revendication 11 ou 12, **caractérisée en ce que** ladite couche silicatisée (7) est formée d'une couche de particules d'alumine enrobées de silice implantées sur tout ou partie de la surface du joint polymère (5) sur une épaisseur moyenne inférieure ou sensiblement égale à 50 µm.

14. Pile selon la revendication 13, **caractérisée en ce que** ladite couche silicatisée (7) est discontinue.

15. Pile selon une quelconque des revendications 11 à 14, **caractérisée en ce que** le joint polymère (5) est en polypropylène, en polyéthylène ou en copolymères de polyéthylène et de polypropylène.

## Patentansprüche

1. Verfahren zur Herstellung einer Batterie, insbesondere einer Knopfbatterie (1), umfassend:
- eine Schale (2), die mit einem Behälter (4) und einem Deckel (3) versehen ist,
- eine Polymerfuge (5), die aus einem thermoplastischen Harz auf Basis von Polyolefinen gefertigt ist, wobei diese Polymerfuge zwischen dem Behälter und dem Deckel zusammengedrückt ist und an die Schale geklebt ist, um für die Undurchlässigkeit der Schale und die galvanische Trennung zwischen dem Behälter und dem Deckel zu sorgen;
wobei dieses Verfahren **dadurch gekennzeichnet ist, dass** es nacheinander Folgendes beinhaltet:
- einen Schritt des Implantierens, durch Reagenz-Sandstrahlen, auf der gesamten Oberfläche der Polymerfuge (5) oder einem Teil davon, die dazu bestimmt ist, an der Schale angebunden zu werden, von mit Kieselerde überzogenen Tonerde-Partikeln, um eine Silikatschicht (7) auf dieser Oberfläche der Polymerfuge zu bilden,
- einen Schritt des Zusetzens einer Kleberschicht (6) auf die Oberfläche der Polymerfuge und/ oder auf die gesamte Fläche des Behälters (4) oder einen Teil davon und/ oder der Oberfläche des Deckels (3), die dazu bestimmt sind, an die Polymerfuge angebunden zu werden, und
- einen Schritt des Zusammensetzens der Schale (2) mit der Polymerfuge (5), die durch Zusammendrücken zwischen dem Behälter und dem Deckel positioniert wird und anhand der Kleberschicht (6) an die Schale geklebt wird.

2. Verfahren zur Herstellung nach Anspruch 1, **dadurch gekennzeichnet, dass** es weiter zwischen dem Schritt des Implantierens einer Silikatschicht (7) und dem Schritt des Zusetzens einer Kleberschicht (6) einen Schritt des Abscheidens einer Schicht eines haftverbessernden Mittels (8) beinhaltet, welches Silangruppen umfasst, die sich chemisch mit der Silikatschicht (7) binden.

3. Verfahren zur Herstellung nach einem der vorstehenden Ansprüche, **dadurch gekennzeichnet, dass** die Kleberschicht (6) beim Schritt des Zusetzens flüssig ist.

4. Verfahren zur Herstellung nach einem der vorstehenden Ansprüche, **dadurch gekennzeichnet, dass** die Kleberschicht (6) aus einem Epoxid-, Acrylat- oder Polyurethankleber gebildet wird.

5. Verfahren zur Herstellung nach Anspruch 2, **dadurch gekennzeichnet, dass** die Kleberschicht (6) aus einem Acrylatkleber gebildet ist; und dadurch, dass das haftverbessernde Mittel (8) funktionelle Gruppen beinhaltet, die dazu bestimmt sind, sich mit der Kleberschicht (6) über eine oder mehrere Bindungen zu binden, die insbesondere aus den Wechselwirkungen in der Art ionisch oder kovalent und schwachen zwischenmolekularen Wechselwirkungen, wie Van-der-Waals-Kräfte oder Wasserstoffbindungen ausgewählt werden; wobei das haftverbessernde Mittel (8) funktionelle Acrylat-Gruppen umfasst, und in Kombination mit dem Acrylatkleber verwendet wird.

6. Verfahren zur Herstellung nach Anspruch 2, **dadurch gekennzeichnet, dass** die Kleberschicht (6) aus einem Epoxidkleber gebildet wird; und dadurch, dass das haftverbessernde Mittel (8) funktionelle Gruppen beinhaltet, die dazu bestimmt sind, sich mit der Kleberschicht (6) über eine oder mehrere Bindungen zu binden, die insbesondere aus den Wechselwirkungen in der Art ionisch oder kovalent und schwachen zwischenmolekularen Wechselwirkungen, wie Van-der-Waals-Kräfte oder Wasserstoffbindungen ausgewählt werden; wobei das haftverbessernde Mittel (8) funktionelle Amin-Gruppen umfasst, und in Kombination mit dem Epoxidkleber verwendet wird.

7. Verfahren zur Herstellung nach einem der vorstehenden Ansprüche, **dadurch gekennzeichnet, dass** der Schritt des Implantierens einer Silikatschicht (7) durch Reagenz-Sandstrahlen mit von mit Kieselerde überzogenen Tonerde-Partikeln ausgeführt wird, die eine mittlere Größe aufweisen, die zwischen 10 µm und 100 µm, und vorzugsweise zwischen 20 um und 40 µm enthalten ist.

8. Verfahren zur Herstellung nach einem der vorstehenden Ansprüche, **dadurch gekennzeichnet, dass** die gesamte Oberfläche des Behälters (4) oder ein Teil davon und der Oberfläche des Deckels (3), die dazu bestimmt sind, an der Fuge (5) angebunden zu werden, vor dem Schritt des Zusetzens der Kleberschicht (6) ebenfalls einem Reagenz-Sandstrahlen mit von mit Kieselerde überzogenen Tonerde-Partikeln unterzogen wird.

9. Verfahren zur Herstellung nach einem der Ansprüche 2, 5, 6 oder einem der Ansprüche 3, 4, 7, 8, von Anspruch 2 abhängig, **dadurch gekennzeichnet, dass** die gesamte Oberfläche des Behälters (4) oder ein Teil davon und der Oberfläche des Deckels (3), die dazu bestimmt sind, an der Fuge (5) angebunden zu werden, vor dem Schritt des Zusetzens der Kleberschicht (6) ebenfalls einem Schritt des Abscheidens einer Schicht eines haftverbessernden Mittels (8) unterzogen wird.

10. Verfahren zur Herstellung nach einem der vorstehenden Ansprüche, **dadurch gekennzeichnet, dass** die Polymerfuge (5) aus Polypropylen, aus Polyethylen oder aus Copolymeren von Polyethylen und von Polypropylen ist.

11. Batterie, insbesondere Knopfbatterie (1), Folgendes umfassend:
- eine Schale (2), die mit einem Behälter (4) und einem Deckel (3) versehen ist,
- eine Polymerfuge (5), die aus einem thermoplastischen Harz auf Basis von Polyolefinen gefertigt ist, wobei diese Polymerfuge zwischen dem Behälter und dem Deckel zusammengedrückt ist und anhand einer Kleberschicht (6) an die Schale geklebt ist, um für die Undurchlässigkeit der Schale und die galvanische Trennung zwischen dem Behälter und dem Deckel zu sorgen;
wobei die Batterie **dadurch gekennzeichnet ist, dass** die Polymerfuge (5) eine Silikatschicht (7) umfasst, die auf ihrer gesamten Oberfläche oder einem Teil davon implantiert ist, wobei diese Silikatschicht mindestens teilweise unter der Kleberschicht (6) gelegen ist, die zwischen der Schale und der Polymerfuge angeordnet ist, um die Haftung zwischen der Polymerfuge und der Kleberschicht zu verbessern.

12. Batterie nach Anspruch 11, **dadurch gekennzeichnet, dass** eine Schicht eines haftverbessernden Mittels (8) zwischen der Silikatschicht (7) und der Kleberschicht (6) zwischengesetzt ist, um die Silikatschicht chemisch mit der Kleberschicht zu binden.

13. Batterie nach Anspruch 11 oder 12, **dadurch gekennzeichnet, dass** die die Silikatschicht (7) aus einer Schicht aus von mit Kieselerde überzogenen Tonerde-Partikeln gebildet wird, die auf der gesamten Oberfläche der Polymerfuge (5) oder einem Teil davon mit einer mittleren Dicke kleiner oder im Wesentlichen gleich 50 µm implantiert ist.

14. Batterie nach Anspruch 13, **dadurch gekennzeichnet, dass** die Silikatschicht (7) unterbrochen ist.

15. Batterie nach einem der Ansprüche 11 bis 14, **dadurch gekennzeichnet, dass** die Polymerfuge (5) aus Polypropylen, aus Polyethylen oder aus Copolymeren von Polyethylen und von Polypropylen ist.

## Claims

1. Method of manufacturing a battery, in particular a button battery (1), comprising:
- a case (2) provided with a container (4) and a cap (3),
- a polymer gasket (5) made of a polyolefin-based thermoplastic resin, this polymer gasket being compressed between the container and the cap and bonded to the case in order to seal the case and galvanically isolate the container from the cap;
this method being **characterised in that** it successively includes:
- a step of implanting, by tribochemical sand blasting on all or part of the surface of the polymer gasket (5) intended to be joined to the case, alumina particles coated in silica in order to form, on this surface of the polymer gasket, a silicatised layer (7),
- a step of adding a layer of adhesive (6) to the surface of the polymer gasket and/or on all or part of the surface of the container (4) and/or of the surface of the cap (3) intended to be joined to the polymer gasket, and
- a step of assembling the case (2) with the polymer gasket (5) positioned by compression between the container and the cap and bonded to the case by means of said layer of adhesive (6).

2. Manufacturing method according to claim 1, **characterised in that** it further includes, between the step of implanting a silicatised layer (7) and the step of adding a layer of adhesive (6), a step of depositing a layer of an adhesion promoter (8) comprising silane groups chemically bonding with the silicatised layer (7).

3. Manufacturing method according to any of the preceding claims, **characterised in that** the layer of adhesive (6) is liquid during the addition step.

4. Manufacturing method according to any of the preceding claims, **characterised in that** the layer of adhesive (6) is formed of an epoxy, acrylate or polyurethane adhesive.

5. Manufacturing method according to claim 2, **characterised in that** the layer of adhesive (6) is formed of an acrylate adhesive ; and **in that** the adhesion promoter (8) includes functional groups intended to bond with the layer of adhesive (6) via one or more bonds, in particular selected from the group comprising interactions of the ionic or covalent type and weak intermolecular interactions such as Van der Waals forces or hydrogen bonds; said adhesion promoter (8) comprising acrylate functional groups and being used in combination with the acrylate adhesive.

6. Manufacturing method according to claim 2, **characterised in that** the layer of adhesive (6) is formed of an epoxy adhesive ; and **in that** the adhesion promoter (8) includes functional groups intended to bond with the layer of adhesive (6) via one or more bonds, in particular selected from the group comprising interactions of the ionic or covalent type and weak intermolecular interactions such as Van der Waals forces or hydrogen bonds; said adhesion promoter (8) comprising amine functional groups and being used in combination with the epoxy adhesive.

7. Manufacturing method according to any of the preceding claims, **characterised in that** the step of implanting a silicatised layer (7) is carried out by tribochemical sand blasting with alumina particles coated in silica having an average particle size that lies in the range 10 µm to 100 µm and, preferably, in the range 20 µm to 40 µm.

8. Manufacturing method according to any of the preceding claims, **characterised in that** all or part of the surface of the container (4) and of the surface of the cap (3) intended to be joined to the gasket (5) also undergoes tribochemical sand blasting with alumina particles coated in silica before the step of adding the layer of adhesive (6).

9. Manufacturing method according to any of claims 2, 5, 6 or to any of claims 3, 4, 7, 8 dependent on claim 2, **characterised in that** all or part of the surface of the container (4) and of the surface of the cap (3) intended to be joined to the gasket (5) also undergoes a step of depositing a layer of an adhesion promoter (8) before the step of adding the layer of adhesive (6).

10. Manufacturing method according to any of the preceding claims, **characterised in that** the polymer gasket (5) is made of polypropylene, polyethylene or of polypropylene and polyethylene copolymers.

11. Battery, in particular a button battery (1), comprising:
- a case (2) provided with a container (4) and a cap (3),
- a polymer gasket (5) made of a polyolefin-based thermoplastic resin, the polymer gasket being compressed between the container and the cap and bonded to the case by means of a layer of adhesive (6) in order to seal the case and galvanically isolate the container from the cap ;
the battery being **characterised in that** the polymer gasket (5) comprises a silicatised layer (7) implanted on all or part of the surface thereof, this silicatised layer being located at least partially under said layer of adhesive (6) which is arranged between the case and the polymer gasket, in order to improve the adhesion between the polymer gasket and the layer of adhesive.

12. Battery according to claim 11, **characterised in that** a layer of an adhesion promoter (8) is inserted between said silicatised layer (7) and the layer of adhesive (6) in order to chemically bond the silicatised layer with the layer of adhesive.

13. Battery according to claim 11 or 12, **characterised in that** said silicatised layer (7) is formed by a layer of alumina particles coated in silica implanted on all or part of the surface of the polymer gasket (5) over an average thickness of less than or substantially equal to 50 µm.

14. Battery according to claim 13, **characterised in that** said silicatised layer (7) is discontinuous.

15. Battery according to any of claims 11 to 14, **characterised in that** the polymer gasket (5) is made of polypropylene, polyethylene or of polypropylene and polyethylene copolymers.
